# EUROPÄISCHE PATENTSCHRIFT

(11) **EP 1 090 814 B1**
(45) Veröffentlichungstag und Bekanntmachung des Hinweises auf die Patenterteilung: **04.04.2007**
(21) Anmeldenummer: 00250296.1
(22) Anmeldetag: 06.09.2000
(51) Int. Cl.: B60R 21/20, B60N 2/48, B60N 2/427

(54) **Kopfstütze mit einem schwenkbaren Kopfstützen-Vorderteil**
Headrest with tiltable front part
Appui-tête avec une partie avant basculante

(30) Priorität: 01.10.1999 DE 19947309
(43) Veröffentlichungstag der Anmeldung: 11.04.2001
(73) Patentinhaber: Volkswagen AG, 38436 Wolfsburg (DE)
(72) Erfinder: Hackenberg, Ulrich, 85139 Wettstetten (DE)
(74) Vertreter: Schneider, Henry

(56) Entgegenhaltungen:
- EP-A- 0 593 845
- DE-A- 19 548 339
- DE-C- 19 756 700
- DE-U- 9 215 254
- US-A- 4 720 146

## Beschreibung

Die Erfindung betrifft eine Kopfstütze gemäß dem Oberbegriff des Patentanspruchs 1.

Damit die Kopfstütze im normalen Fahrbetrieb, das heißt in crashfreien Zeiten, die Fahrzeuginsassen in ihrem Komfort nicht beeinträchtigt, sind Kopfstützenanordnungen bekannt geworden, bei denen die Kopfstütze als Ganzes oder ein Vorderteil der Kopfstütze sich im Normalbetrieb in einer von dem zu schützenden Kopf etwas entfernten Position befindet und beim Auftreten eines durch einen Crash- oder Precrashsensor erfassten Crashs angesteuerten Antrieb in eine kopfnahe Position, die auch als Sicherheitsstellung zu bezeichnen ist, bewegt wird. Während derartige Kopfstützen also im Normalbetrieb die Bewegungsfreiheit des Kopfes nicht einengen, bilden sie bei einem Crash einen nach kurzer Kopfbewegung wirksamen Auffänger für den durch seine Trägheit relativ zur Kopfstütze bewegten Kopf des Fahrzeuginsassen.

Während die DE 31 31 633 A1 eine Kopfstütze beschreibt, die als Antrieb eine gespannte Feder verwendet, die beim Crash zur Entspannung freigegeben wird und die dann die gesamte Kopfstütze aus einer Position praktisch hinter der Sitzlehne in eine senkrechte Position schwenkt, zeigt das Gebrauchsmuster DE 92 15 254 U1 eine Kopfstütze mit einem rückenlehnenfesten Tragwerk und einem Kopfstützen-Vorderteil, das beim Zünden eines Airbags um eine im unteren Bereich des Kopfstützenvorderteils vorgesehene Schwenkachse in Richtung nach vorn auf den Kopf des Fahrzeuginsassen auf dem betreffenden Sitz geschwenkt wird. Dieses Konstruktionsprinzip hat den Vorteil, dass im Crashfall kleinere Massen, nämlich nur der Kopfstützen-Vorderteil, bewegt werden müssen. Nachteilig ist jedoch, dass aufgrund der Anordnung der Schwenkachse im unteren Endbereich des Kopfstützen-Vorderteils seine Vorderseite im Crashfalle eine ungünstige Neigung haben kann, nämlich so, dass sie schräg von oben auf den Hinterkopf auftrifft. Dies kann dazu führen, dass - insbesondere bei im Wesentlichen senkrechter Stellung der Rückenlehne - der aufprallende Kopf des Fahrzeuginsassen gleichsam nach vorn geknickt wird.

Ferner beschreibt die DE 195 48 339 A1 ein gattungsgemäße Kopfstütze, bei welcher der Polsterträger auf einer im oberen Bereich des Kopfpolsters zwischen den Haltestangen des Stützgliedes befestigten Querachse aufgenommen ist. Im unteren Bereich des Kopfpolsters ist ein aufblasbarer, bei Aufblasen zwischen Polsterträger und Haltestangen sich abstützender, Luftsack angeordnet, wobei der Luftsack einerseits an einem im Crashfall schlagartig sich entlehrenden Druckluftspeicher und andererseits über ein Be- und Entlüftungsventil an einer Druckluftquelle angeschlossen ist. Ein Bedienglied ist als Schalter zum Umschalten des Be- und Entlüftungsventils aus einer die Verbindung zwischen Druckluftquelle und Luftsack sperrenden Grundstellung einerseits in eine Belüftungsstellung und andererseits in eine Entlüftungsstellung für den Luftsack ausgebildet. Nachteilig bei dieser Lösung ist, dass zwar der Luftsack im Bereich der Kopfstütze angeordnet ist, jedoch die Druckluftquelle außerhalb der Kopfstütze angeordnet ist, so dass bei einer Installation der Kopfstütze an einem Fahrzeugsitz montageseitig ein hoher Aufwand zur Verbindung der Kopfstütze mit dem Druckluftspeicher notwendig ist.

Der Erfindung liegt die Aufgabe zugrunde, eine gattungsgemäße Kopfstütze mit einfachen Maßnahmen ohne zusätzlichen Aufwand so zu gestalten, dass die Vorderseite des Kopfstützen-Vorderteils im Crashfall eine für die Sicherheit des aufprallenden Kopfes günstige Neigung besitzt.

Die erfindungsgemäße Lösung dieser Aufgabe besteht in den Merkmalen des Anspruchs 1.

Infolge der einfachen erfindungsgemäßen Maßnahme, nämlich der Anordnung der querverlaufenden Schwenkachse im oberen Endbereich des Kopfstützen-Vorderteils, wird also im Crashfall das beschriebene Auftreffen des Kopfstützen-Vorderteils auf den Kopf des Fahrzeuginsassen schräg von oben her unterbunden.

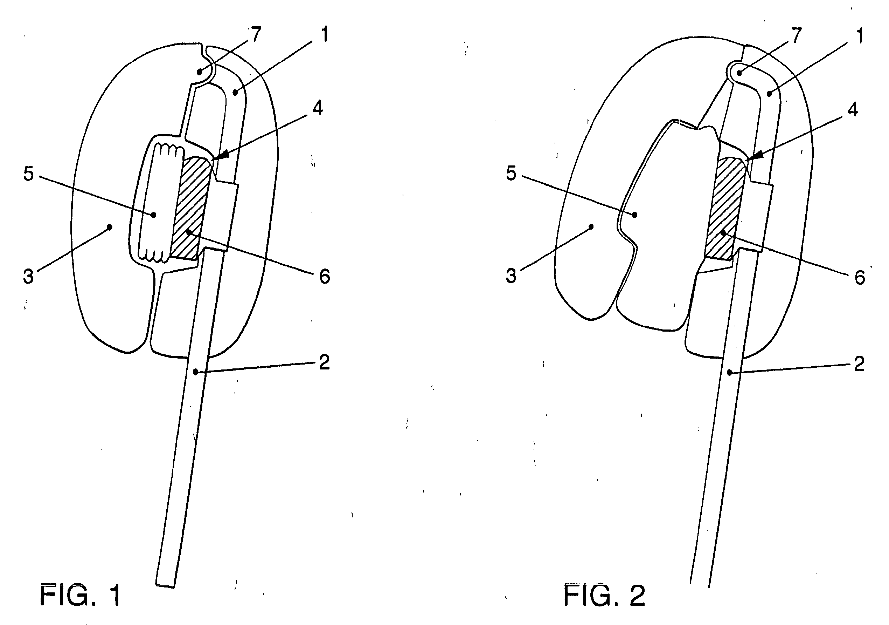

Ein Ausführungsbeispiel der Erfindung wird im folgenden anhand der Zeichnung erläutert, deren Figur 1 in einem Längsschnitt durch das Fahrzeug die Verhältnisse im normalen Fahrbetrieb und deren Figur 2 die Verhältnisse bei einem Crash wiedergeben.

Betrachtet man zunächst Figur 1, so besteht die erfindungsgemäße Kopfstütze gleichsam aus drei Bereichen, nämlich dem Tragwerk 1, das sich in übliche Tragstangen 2 fortsetzt, die in Aufnahmen einer nicht gezeichneten Sitzrückenlehne geführt sind, dem Kopfstützen-Vorderteil 3, der eine Schale mit einem Polster enthalten kann, und dem Antrieb 4 mit dem in Figur 1 zusammengefalteten Airbag 5. Dieser ist kräftemäßig zusammen mit seinem Gasgenerator 6 zwischen Tragwerk 1 und Kopfstützen-Vorderteil 3 angeordnet. Schlagwortartig kann man sagen, dass während des normalen Fahrbetriebs (Figur 1) die Kopfstütze einer geschlossenen Muschel gleicht.

Sobald ein nicht gezeichneter, da an sich bekannter Crash- oder Precrashsensor den Airbag 5 aktiviert, so dass er gemäß der Darstellung in Figur 2 expandiert, schwenkt der Airbag 5 den Kopfstützen-Vorderteil 3 um die in seinem oberen Endbereich querverlaufende Schwenkachse 7, mit der er an dem Tragwerk 1 befestigt ist. Die eben beschriebene Muschel klappt also gleichsam auf, so dass der Kopfstützen-Vorderteil 3 aus einer vom Insassenkopf entfernten Komfortstellung (Figur 1) in eine kopfnahe Sicherheitsstellung gemäß Figur 2 geschwenkt wird.

Der Airbag ist mit Öffnungen oder Undichtigkeiten versehen, die unter der Wirkung des Aufpralls des Kopfes eine zumindest teilweise Entleerung des Airbags mit einer Entleerungsgeschwindigkeit sicherstellen, die im Hinblick auf den Kopfschutz gewählt ist. Damit erfolgt durch den Antrieb 4 also auch eine Umsetzung von kinetischer Energie in Verformungsarbeit.

Mit der Erfindung ist demgemäß eine gattungsgemäße Kopfstütze geschaffen, die nicht nur eine Bewegung des Kopfstützen-Vorderteils aus einer Komfortstellung in eine Sicherheitsstellung schlechthin gewährleistet, sondern zugleich eine optimale Neigung der Vorderseite des Kopfstützen-Vorderteils sicherstellt.

## Patentansprüche

1. Kopfstütze für einen Fahrzeugsitz mit einem bei einem Crash sitzfesten Tragwerk (1), an dem ein zum Aufprall des Kopfes eingerichtetes Kopfstützen-Vorderteil (3) bei einem Crash aus einer kopffernen Komfortstellung in eine kopfnahe Sicherheitsstellung mittels eines von einem Crash- oder Precrashsensor betätigten Antriebs (4) um eine horizontale Schwenkachse schwenkend gelagert ist,
**dadurch gekennzeichnet, dass**
- der Antrieb (4) einen Airbag (5) und einen Gasgenerator (6) umfasst, welche zwischen dem Tragwerk (1) und dem Kopfstützen-Vorderteil (3) angeordnet sind,
- wobei der aktivierte Airbag (5) das Kopfstützen-Vorderteil (3) um die in einem oberen Bereich des Kopfstütze-Vorderteils (3) vorgesehene Schwenkachse (7) schwenkt und
- der Airbag (5) mit Öffnungen oder Undichtigkeiten versehen ist, die unter der Wirkung des Aufpralls des Kopfes eine zumindest teilweise Entleerung des Airbags mit einer Entleerungsgeschwindigkeit sicherstellen, die im Hinblick auf den Kopfschutz gewählt ist.

## Claims

1. Headrest for a vehicle seat, with a supporting mechanism (1) which is fixed on the seat in the event of a crash and on which a headrest front part (3), which is provided for the impact of the head, is mounted such that, in the event of a crash, it pivots about a horizontal pivot axis from a comfort position away from the head into a safety position in the vicinity of the head by means of a drive (4) actuated by a crash sensor or precrash sensor, **characterized in that**
- the drive (4) comprises an airbag (5) and a gas generator (6), which are arranged between the supporting mechanism (1) and the headrest front part (3),
- the activated airbag (5) pivoting the headrest front part (3) about the pivot axis (7) provided in an upper region of the headrest front part (3), and
- the airbag (5) is provided with openings or leakage points which, under the action of the impact of the head, ensure an at least partial emptying of the airbag at an emptying speed which is chosen in respect of protecting the head.

## Revendications

1. Appui-tête pour un siège de véhicule, comprenant un mécanisme de support (1) fixé au siège dans le cas d'une collision, sur lequel est montée une partie avant (3) d'appui-tête prévue pour l'impact de la tête dans le cas d'une collision, prévue pour pivoter autour d'un axe de pivotement horizontal depuis une position de confort éloignée de la tête dans une position de sécurité proche de la tête au moyen d'un entraînement (4) actionné par un capteur de collision ou de pré-collision,
**caractérisé en ce que**
- l'entraînement (4) comprend un airbag (5) et un générateur de gaz (6) qui sont disposés entre le mécanisme de support (1) et la partie avant (3) de l'appui-tête,
- l'airbag activé (5) faisant pivoter la partie avant (3) de l'appui-tête autour de l'axe de pivotement (7) prévu dans une région supérieure de la partie avant (3) de l'appui-tête et
- l'airbag (5) étant pourvu d'ouvertures ou de défauts d'étanchéité qui garantissent, sous l'effet de l'impact de la tête, un vidage au moins partiel de l'airbag avec une vitesse de vidage qui est sélectionnée en vue de protéger la tête.
